# EUROPEAN PATENT APPLICATION

(11) **EP 2 570 635 A1**
(43) Date of publication of application: **20.03.2013**
(21) Application number: 10851368.0
(22) Date of filing: 10.05.2010
(51) Int. Cl.: F02D 19/06, F01N 3/20, F02D 45/00

(54) **VEHICLE CONTROL DEVICE**

(71) Applicant: TOYOTA JIDOSHA KABUSHIKI KAISHA, Toyota-shi, Aichi-ken, 471-8571 (JP)
(72) Inventor: NAKAYAMA, Yusuke, Toyota-shi, Aichi 471-8571 (JP)
(74) Representative: Intès, Didier Gérard André
(86) International application number: PCT/JP2010/057887
(87) International publication number: WO 2011/141985

(57) **Abstract**

A vehicle control apparatus (100) is mounted on a vehicle (1) provided with: an engine (10) which can use a first fuel and a second fuel in which emission is lower than that of the first fuel; a fuel changing device (21, 23, 31) capable of changing between the first fuel and the second fuel and supplying it to the engine; and a catalyst (13) placed in an exhaust system (12) of the engine. The vehicle control apparatus is provided with: a catalyst deterioration detecting device (31) capable of performing detection of deterioration of the catalyst; and a controlling device (31) for controlling the catalyst deterioration detecting device to perform the detection of the deterioration when an operating range of the vehicle corresponds to an operating range suitable for the detection of the deterioration and when the first fuel is supplied to the engine by the fuel changing device.

## Description

### Technical Field

The present invention relates to a control apparatus for a vehicle, such as an automobile, and particularly relates to a control apparatus for a vehicle equipped with an engine which can use two types of fuel such as liquid fuel and gaseous fuel (i.e. a bifuel engine).

### Background Art

In a vehicle equipped with this type of apparatus, detection of degradation of a catalyst, such as a three-way catalyst, disposed in an exhaust passage of the engine is performed in many cases. As a method of detecting the deterioration of the catalyst, for example, there has been suggested a method in which feedback control is performed on an air-fuel ratio according to an output of an O₂ sensor disposed on the downstream side of the catalyst installed in an exhaust system of the engine using natural gas as fuel, in which a judgment parameter is calculated on the basis of an inversion cycle of the sensor output which is being subject to the feedback control, and in which it is judged that the catalyst is deteriorated when the calculated judgment parameter is less than a judgment reference value (refer to a patent document 1).

Alternatively, there has been suggested a method in which oxygen concentration in an exhaust gas is measured by using a sub oxygen sensor disposed on the downstream side of the three-way catalyst placed in an exhaust tube of a gas engine, in which it is judged from an output of the sub oxygen sensor whether it is in a gas-rich state or a gas-lean state, in which NOₓ concentration in the exhaust gas is determined by using an NOₓ sensor placed on the downstream of the three-way catalyst only if it is judged that it is in the gas-rich state or only if it is judged from an output voltage of the sub oxygen sensor that it is close to a control target, and in which it is judged whether or not there is the deterioration of the catalyst from the NOₓ concentration (refer to a patent document 2).

### Prior Art Document

### Patent Document

Patent document 1: Japanese Patent Application Laid Open No. Hei 11-159375
Patent document 2: Japanese Patent Application Laid Open No. Hei 9-125937

### Disclosure of Invention

### Subject to be Solved by the Invention

However, the aforementioned patent document has such a technical problem that it does not disclose a method of detecting the deterioration of the catalyst in a vehicle equipped with the bifuel engine (hereinafter referred to as a "bifuel vehicle" as occasion demands). Here, in particular, there is also such a technical problem that emission becomes worse depending on the fuel used in performing the detection of the deterioration of the catalyst.

In view of the aforementioned problems, it is therefore an object of the present invention to provide a vehicle control apparatus capable of appropriately performing the detection of the deterioration of the catalyst while suppressing the emission deterioration in the bifuel vehicle.

### Means for Solving the Subject

The above object of the present invention can be achieved by a vehicle control apparatus mounted on a vehicle provided with: an engine which can use a first fuel and a second fuel in which emission is lower than_that of the first fuel; a fuel changing device capable of changing between the first fuel and the second fuel and supplying it to the engine; and a catalyst placed in an exhaust system of the engine, the vehicle control apparatus provided with: a catalyst deterioration detecting device capable of performing detection of deterioration of the catalyst; and a controlling device for controlling the catalyst deterioration detecting device to perform the detection of the deterioration when an operating range of the vehicle corresponds to an operating range suitable for the detection of the deterioration and when the first fuel is supplied to the engine by the fuel changing device.

According to the vehicle control apparatus of the present invention, the vehicle control apparatus is mounted on a vehicle provided with: an engine which can use a first fuel such as a compressed natural gas (CNG) and a second fuel such as gasoline in which emission is lower than_that of the first fuel; a fuel changing device capable of changing between the first fuel and the second fuel and supplying it to the engine; and a catalyst such as a three-way catalyst placed in an exhaust system of the engine.

The catalyst deterioration detecting device which is provided with, for example, a memory, a processor, and the like can perform detection of deterioration of the catalyst. Incidentally, to the "detection of deterioration of the catalyst", various known aspects can be applied, such as a Cmax method in which the air-fuel ratio is changed alternately to be rich and lean in an operating range where a purification capacity of the catalyst can be accurately recognized, in which oxygen is adsorbed to or desorbed from the catalyst, and in which an O₂ storage capacity (OSC) is calculated.

The controlling device which is provided with, for example, a memory, a processor, and the like controls the catalyst deterioration detecting device to perform the detection of the deterioration when an operating range of the vehicle corresponds to an operating range suitable for the detection of the deterioration and when the first fuel is supplied to the engine by the fuel changing device. Here, the "operating range suitable for the detection of the deterioration" means an operating range which is not influenced by or is within an allowable range of a driving state of the vehicle with respect to the detection of the catalyst deterioration, which satisfies conditions such as, for example, that the catalyst is completely warmed up, that the air-fuel ratio is stable, and that an intake air amount is within a specified range.

The expression "when the first fuel is supplied to the engine by the fuel changing device" is not limited to when the first engine is actually supplied to the engine but may include a period (or mode) in which the first fuel is supplied to the engine, regularly or irregularly.

According to a study by the present inventors, the following matter has been found; namely, in a bifuel vehicle, the detection of the deterioration of the catalyst is performed in many cases when the bifuel vehicle drives with the liquid fuel such as gasoline. Then, due to the detection of the deterioration of the catalyst, the emission possibly becomes worse. Thus, this possibly prevents the super low emission of the vehicle.

However, in the present invention, as described above, by the controlling device, the catalyst deterioration detecting device is controlled to perform the detection of the deterioration when the operating range of the vehicle corresponds to the operating range suitable for the detection of the deterioration and when the first fuel is supplied to the engine by the fuel changing device. In other words, in the present invention, since the detection of the deterioration is performed by the catalyst deterioration detecting device when the first fuel in which the emission is better than that of the second fuel is supplied to the engine, it is possible to prevent that the emission becomes worse beyond an allowable range due to the detection of the deterioration of the catalyst. Therefore, according to the vehicle control apparatus of the present invention, it is possible to appropriately perform the detection of the deterioration of the catalyst while suppressing the emission deterioration in the bifuel vehicle.

In one aspect of the vehicle control apparatus of the present invention, the controlling device controls the fuel changing device to supply the first fuel to the engine and controls the catalyst deterioration detecting device to perform the detection of the deterioration after the operating range of the vehicle corresponds to the operating range suitable for the detection of the deterioration when the second fuel is supplied to the engine by the fuel changing device.

According to this aspect, in the vehicle control apparatus, if the operating range of the vehicle corresponds to the operating range suitable for the detection of the deterioration when the second fuel is supplied to the engine, the detection of the deterioration is not performed as it is, but the fuel supplied to the engine is changed from the second fuel to the first fuel, and then, the detection of the deterioration is performed. Therefore, it is possible to suppress the emission deterioration.

Incidentally, the expression "when the second fuel is supplied to the engine by the fuel changing device" is not limited to when the second fuel is actually supplied to the engine but may include a period (or mode) in which the second fuel is supplied to the engine, regularly or irregularly.

In another aspect of the vehicle control apparatus of the present invention, the controlling device controls the fuel changing device to keep supplying the first fuel to the engine even after the operating range of the vehicle corresponds to an operating range in which the second fuel is to be supplied to the engine, controls the catalyst deterioration detecting device to perform the detection of the deterioration after the operating range of the vehicle corresponds to the operating range suitable for the detection of the deterioration, and controls the fuel changing device to supply the second fuel to the engine after the detection of the deterioration is performed by the catalyst deterioration detecting device.

According to this aspect, in the vehicle control apparatus, a period in which the vehicle drives with the first fuel (i.e. a period in which the first fuel is supplied to the engine) is extended, and the detection of the deterioration is performed after the operating range of the vehicle corresponds to the operating range suitable for the detection of the deterioration. Then, after the detection of the deterioration is performed, the fuel changing device is controlled by the controlling device to supply the second fuel to the engine.

According to the study by the present inventors, the following matter has been found; namely, in the bifuel vehicle, in many cases, the first fuel in which the emission is relatively good is used to start the engine, and for example, after the catalyst is sufficiently warmed up, the fuel supplied to the engine is changed from the first fuel to the second fuel. Thus, if the fuel is changed again to the first fuel in order to detect the deterioration after the fuel is changed to the second fuel, the emission and/or drivability possibly becomes worse due to the fuel change.

However, in the present invention, as described above, by the controlling deice, the fuel changing device is controlled to keep supplying the first fuel to the engine even after the operating range of the vehicle corresponds to the operating range in which the second fuel is to be supplied to the engine, and the catalyst deterioration detecting device is controlled to perform the detection of the deterioration after the operating range of the vehicle corresponds to the operating range suitable for the detection of the deterioration. Therefore, since the number of times to change the fuel can be suppressed, it is possible to suppress the emission and/or drivability deterioration due to the fuel change.

Incidentally, the expression "the operating range in which the second fuel is to be supplied to the engine" means an operating range in which the emission of the first fuel and the emission of the second fuel are substantially equal after the catalyst is warmed up.

In this aspect, the controlling device may control the fuel changing device to supply the second fuel to the engine when a time length for supplying the first fuel to the engine elapses a predetermined time if the fuel changing device is controlled by the controlling device to keep supplying the first fuel to the engine even after the operating range of the vehicle corresponds to the operating range in which the second fuel is to be supplied to the engine.

By virtue of such a configuration, it is possible to prevent that the first fuel is used, for example, more than intended by a manufacturer or the like, which is extremely useful in practice. In particular, in a case where the first fuel is gaseous fuel such as a CNG, since a facility or equipment capable of supplying the gaseous fuel is limited, it is possible to reduce a user's load or burden, such as refilling the first fuel, by suppressing the amount of the first fuel used

The "predetermined time" of the present invention is a value for determining whether or not the fuel supplied to the engine is changed from the first fuel to the second fuel, and it is a value set as a fixed value or a variable value according to some physical quantity or parameter in advance. Such a "predetermined time" may be set as a time for consuming the first fuel corresponding to a maximum value in an allowable range of the first fuel which can be used at the start of the engine, wherein the allowable range is obtained in accordance with a maximum capacity of a fuel tank for storing the first fuel, by experiments, experiences, or simulations.

In another aspect of the vehicle control apparatus of the present invention, the controlling device controls the fuel changing device to supply the second fuel to the engine and controls the catalyst deterioration detecting device to perform the detection of the deterioration after the detection of the deterioration is performed by the catalyst deterioration detecting device.

According to this aspect, in the vehicle control apparatus, the detection of the deterioration of the catalyst is performed on each of the first fuel and the second fuel.

According to the study by the present inventors, the following matter has been found; namely, in a region such as US and Europe, the detection of the deterioration of the catalyst is regulated by an on board diagnosis (OBD) regulation. Depending on a regulatory trend, there is a possibility that it will be obliged to perform the detection of the deterioration of the catalyst in both the two types of fuel in the bifuel vehicle in the future. In this case, due to the fuel change associated with the detection of the deterioration of the catalyst, the drivability and/or emission possibly becomes worse.

However, in the present invention, as described above, by the controlling device, the fuel changing device is controlled to supply the second fuel to the engine, and the catalyst deterioration detecting device is controlled to perform the detection of the deterioration after the detection of the deterioration is performed by the catalyst deterioration detecting device. Therefore, even if it is obliged to perform the detection of the deterioration of the catalyst in both the two types of fuel in the future, it is possible to appropriately perform the detection of the deterioration of the catalyst. In addition, since the number of times to change the fuel can be suppressed, it is possible to suppress the drivability and/or emission deterioration due to the fuel change.

In an aspect in which the fuel changing device is controlled to keep supplying the first fuel to the engine even after the operating range corresponds to the operating range in which the second fuel is to be supplied to the engine, the controlling device may control the fuel changing device to supply the second fuel to the engine and controls the catalyst deterioration detecting device to perform the detection of the deterioration after the detection of the deterioration is performed by the catalyst deterioration detecting device.

By virtue of such a configuration, the detection of the deterioration of the catalyst can be performed on each of the first fuel and the second fuel. Thus, even if it is obliged to perform the detection of the deterioration of the catalyst in both the two types of fuel in the future, it is possible to appropriately perform the detection of the deterioration of the catalyst. In addition, since the number of times to change the fuel can be suppressed, it is possible to suppress the drivability and/or emission deterioration due to the fuel change.

In another aspect of the vehicle control apparatus of the present invention, the controlling device controls the catalyst deterioration detecting device to perform the detection of the deterioration, subsequently controls the fuel changing device to supply the first fuel to the engine, and controls the catalyst deterioration detecting device to perform the detection of the deterioration, after the operating range of the vehicle corresponds to the operating range suitable for the detection of the deterioration when the second fuel is supplied to the engine by the fuel changing device.

According to this aspect, in the vehicle control apparatus, the detection of the deterioration of the catalyst is performed on each of the first fuel and the second fuel. In addition, before the fuel supplied to the engine is changed from the second fuel to the first fuel, the detection of the deterioration of the catalyst is performed on the second fuel. Thus, it is possible to suppress the number of times to change the fuel due to the detection of the deterioration.

By the way, if the driving state of the vehicle changes, the detection of the deterioration of the catalyst is stopped in some cases. Here, in a case where the fuel supplied to the engine is the liquid fuel, if the detection of the deterioration is stopped many times, the emission becomes worse. On the other hand, for example, in the CNG or the like, the emission is relatively good. Thus, even if the detection of the deterioration is stopped, the emission hardly becomes worse, which has been found from the study by the present inventors.

As in this aspect, firstly, by performing the detection of the deterioration of the catalyst on the second fuel in which the emission is relatively low, it is possible to suppress the possibility that the detection of the deterioration is stopped. Therefore, according to this aspect, it is possible to suppress the emission deterioration due to the stop of the detection of the deterioration.

In another aspect of the vehicle control apparatus of the present invention, the first fuel is gaseous fuel and the second fuel is liquid fuel.

For example, until the catalyst is warmed up and can perform a predetermined purification function, the first fuel which is the gaseous fuel is supplied to the engine. This can improve the emission of the vehicle, which is extremely useful in practice. On the other hand, after the catalyst can perform the predetermined purification function, the second fuel which is the liquid fuel is supplied to the engine. This can suppress the number of refill the fuel, which is extremely useful in practice.

The operation and other advantages of the present invention will become more apparent from Mode for Carrying Out the Invention explained below.

### Brief Description of Drawings

[FIG. 1] FIG. 1 is a block diagram showing a configuration of a vehicle equipped with a vehicle control apparatus in an embodiment of the present invention
[FIG. 2] FIG. 2 is a table showing one example of amount of CO₂ generated in a well-to-wheel for each fuel.
[FIG. 3] FIG. 3 is a flowchart showing a catalyst deterioration detecting process performed by an ECU in the embodiment of the present invention.
[FIG. 4] FIG. 4 is a flowchart showing a catalyst deterioration detecting process performed by an ECU in a modified example of the present invention.

### Mode for Carrying Out the Invention

Hereinafter, an embodiment of the vehicle control apparatus of the present invention will be explained with reference to the drawings.

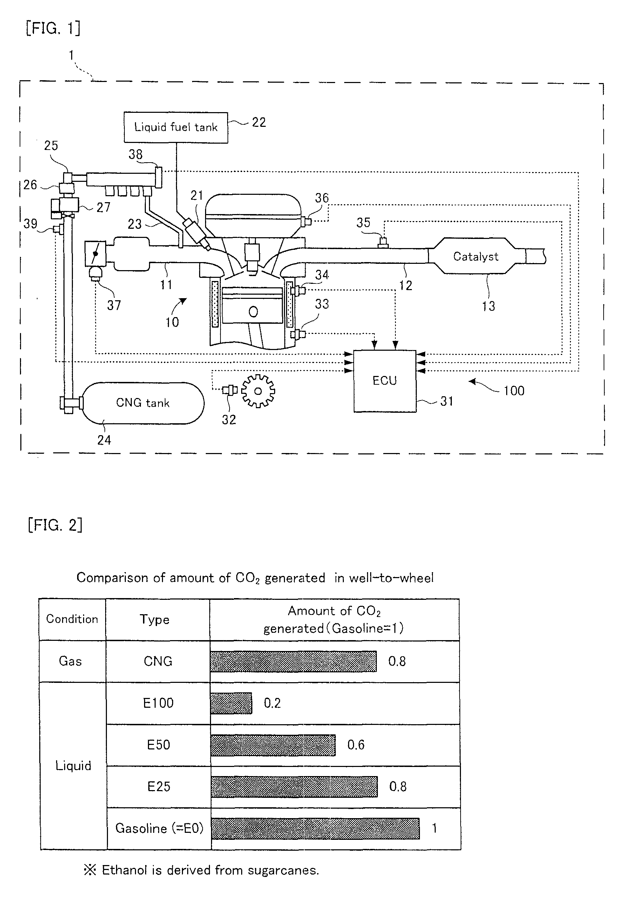

Firstly, a configuration of a vehicle equipped with the vehicle control apparatus in the embodiment will be explained with reference to FIG. 1. FIG. 1 is a block diagram showing the configuration of the vehicle equipped with the vehicle control apparatus in the embodiment. Incidentally, for convenience of explanation, FIG. 1 shows only members directly related to the embodiment, and the illustration of other members is omitted as occasion demands.

In FIG. 1, a vehicle 1 is provided with: an engine 10; an intake passage 11 and an exhaust passage 12 connected to a combustion chamber of the engine 10; a three-way catalyst 13 placed in the exhaust passage; a liquid fuel tank 22 for storing liquid fuel such as gasoline and ethanol; a CNG tank 24 for storing a CNG; and an electronic control unit (ECU) 31. Incidentally, for example, on the downstream side of the three-way catalyst 13, a hydrocarbon (HC) absorbent or the like may be placed.

The liquid fuel stored in the liquid fuel tank 22 is supplied to the engine 10 via a delivery pipe and an injector 21 disposed in the intake passage 11. On the other hand, the CNG stored in the CNG tank 24 is supplied to the engine 10 via a delivery pipe and an injector 23 disposed in the intake passage 11. Incidentally, the delivery pipe disposed between the CNG tank 24 and the injector 23 is provided with, for example, a filter-oil separator 25, a shutoff valve 26, a regulator 27, and the like.

In the vehicle 1 configured as described above, the ECU 31 changes between the liquid fuel and the CNG, for example, in the following manner and supplies it to the engine 10.

Namely, until the passage of a predetermined time from the start of the engine 10, the ECU 31 controls the injector 23 to supply the CNG to the engine 10 and controls the injector 21 not to supply the liquid fuel to the engine 10. On the other hand, after the passage of the predetermined time, the ECU 31 controls the injector 21 to supply the liquid fuel to the engine 10 and controls the injector 23 not to supply the CNG to the engine 10.

In other words, if a driving distance of the vehicle 1 is relatively short, the ECU 31 controls each of the injectors 21 and 23 such that only the CNG is supplied to the engine 10. On the other hand, if the driving distance of the vehicle 1 is relatively long, the ECU 31 controls each of the injectors 21 and 23 such that the fuel supplied to the engine 10 is changed from the CNG to the liquid fuel and such that the vehicle 1 mainly uses the liquid fuel to drive.

By virtue of such a configuration, it is possible to make a range of the vehicle 1 relatively long while making a capacity of the CNG tank 24 relatively small. In addition, with the miniaturization of the CNG tank 24, it is also possible to reduce the weight and size of the vehicle 1, or to expand a cabin space.

Alternatively, until the three-way catalyst 13 is warmed up (i.e. until the three-way catalyst 13 can perform a predetermined purification function), the ECU 31 controls the injector 23 to supply the CNG to the engine 10 and controls the injector 21 not to supply the liquid fuel to the engine 10. On the other hand, after the three-way catalyst 13 is warmed up (i.e. after the three-way catalyst 13 can perform the predetermined purification function), the ECU 31 controls the injector 21 to supply the liquid fuel to the engine 10 and controls the injector 23 not to supply the CNG to the engine 10.

In other words, until the three-way catalyst 13 is warmed up, the ECU 31 controls each of the injectors 21 and 23 such that only the CNG in which emission is relatively good is supplied to the engine 10. On the other hand, after the three-way catalyst 13 is warmed up, the ECU 31 controls each of the injectors 21 and 23 such that the fuel used in the engine 10 is changed from the CNG from the liquid fuel and such that the vehicle 1 mainly uses the liquid fuel to drive.

By virtue of such a configuration, it is possible to reduce amount of emissions before the three-way catalyst 13 is warmed up. In addition, if the liquid fuel is, for example, ethanol, as shown in FIG. 2 (refer to "E100"), it is possible to significantly reduce CO₂ emitted after the three-way catalyst 13 is warmed up. FIG. 2 is a table showing one example of amount of CO₂ generated in a well-to-wheel for each fuel.

Moreover, at the cold start at low temperatures, such as an outside air temperature of below zero, difficulty in vaporizing the liquid fuel (which becomes more notable particularly with an increase in concentration of ethanol or the like included in the liquid fuel) possibly reduces the startability of the engine 10; however, the use of the CNG can suppress the reduction in the startability of the engine 10.

Incidentally, the three-way catalyst 13 may be an electrically-heating type three-way catalyst. By virtue of such a configuration, the three-way catalyst 13 can be warmed up at a relatively early stage, and thus the amount of the CNG used can be suppressed.

During the driving of the vehicle 1, as described above, the liquid fuel and the CNG are mutually changed and supplied to the engine 10. By this, it is possible to reduce the emission of the vehicle 1 and to reduce CO₂.

The "CNG" and the "liquid fuel" in the embodiment are one example of the "first fuel" and the "second fuel", respectively, and the "injectors 21 and 23" and the "ECU 31" are one example of the "fuel changing device" of the present invention.

In FIG. 1, a vehicle control apparatus 100 is provided with: the ECU 31, an engine speed sensor 32; a knock sensor 33; a water temperature sensor 34; an air-fuel ratio sensor 35; a cam angle sensor 36; a throttle position sensor 37; a gas temperature sensor 38; and a gas pressure sensor 39.

Here, the ECU 31 can perform predetermined deterioration detection such as, for example, a Cmax method. Moreover, the ECU 31 performs the predetermined deterioration detection when the operating range of the vehicle 1 corresponds to an operating range in which the detection of the deterioration of the three-way catalyst 13 can be accurately performed and when the CNG is supplied to the engine 10. Incidentally, the ECU 31 may also perform the predetermined deterioration detection when the liquid fuel is supplied to the engine 10 in addition to when the CNG is supplied to the engine 10.

The "ECU 31" in the embodiment is one example of the "catalyst deterioration detecting device" and the "controlling device" of the present invention. In the embodiment, one portion of the functions of the ECU 31 for various electronic controls of the vehicle 1 is used as one portion of the vehicle control apparatus 10.

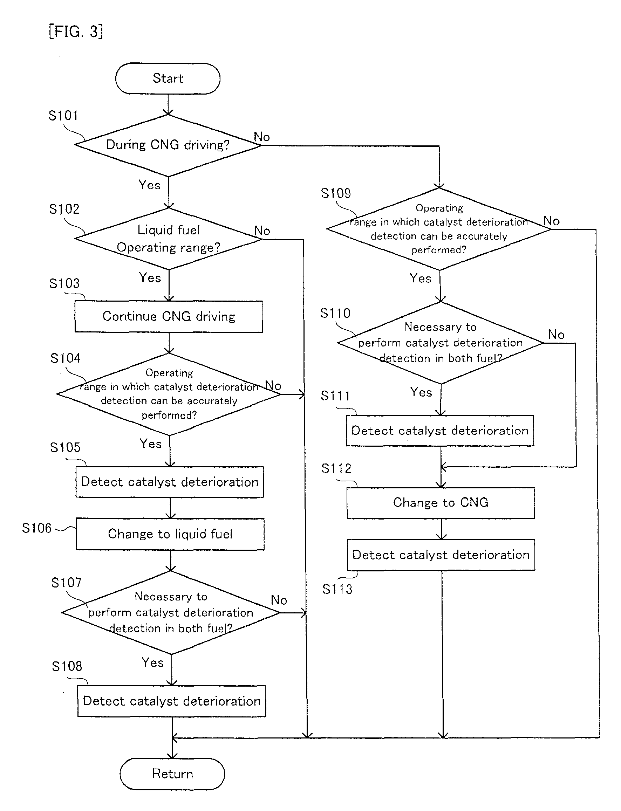

With reference to a flowchart in FIG. 3, an explanation will be given to a catalyst deterioration detecting process performed by the ECU 31 as one portion of the vehicle control apparatus 100, mainly during the driving of the vehicle 1 equipped with the vehicle control apparatus 100 as configured above.

In FIG. 3, firstly, the ECU 31 judges whether or not it is during CNG driving (i.e. whether or not the vehicle 1 drives with the CNG as the fuel) (step S101). If it is judged to be during the CNG driving (the step S101: Yes), the ECU 31 judges whether or not the operating range of the vehicle 1 corresponds to a liquid fuel operating range (step S102).

Here, whether or not the operating range of the vehicle 1 is the liquid fuel operating range may be judged by obtaining, for example, an engine water temperature, the number of revolutions of the engine, a load factor and the like on the basis of signals outputted from the various sensors and by judging whether or not it is in an operating range in which the amount of emissions is small even if the liquid fuel is used. Alternatively, whether or not the operating range of the vehicle 1 is the liquid fuel operating range may be judged, for example, on the basis of a map for defining a CNG operating range and the liquid fuel operating range or the like.

If it is judged that the operating range of the vehicle 1 does not correspond to the liquid fuel operating range (the step S102: No), the process is returned and stopped to be in a standby state. In other words, until reaching next process start timing uniquely determined by a predetermined cycle, the implementation of the process in the step S101 is stopped to be in the standby state.

On the other hand, if it is judged that the operating range of the vehicle 1 corresponds to the liquid fuel operating range (the step S102: Yes), the ECU 31 controls each of the injectors 21 and 23 to continue the CNG driving (i.e. to supply the CNG to the engine 10 and not to supply the liquid fuel to the engine 10) (step S103).

Then, the ECU 31 judges whether or not the operating range of the vehicle 1 corresponds to the operating range in which the detection of the deterioration of the three-way catalyst 13 can be accurately performed (step S104). Here, whether or not the operating range of the vehicle 1 corresponds to the operating range in which the detection of the deterioration can be accurately performed may be judged by judging whether it is after the three-way catalyst 13 is completely warmed up, whether the air-fuel ratio is stable, whether an intake air mount is within a specified range, or the like, on the basis of the signals outputted from the various sensors.

If it is judged that the operating range of the vehicle 1 does not correspond to the operating range in which the detection of the deterioration of the three-way catalyst 13 can be accurately performed (the step S 104: No), the process is returned and stopped to be in the standby state. On the other hand, if it is judged that the operating range of the vehicle 1 corresponds to the operating range in which the detection of the deterioration of the three-way catalyst 13 can be accurately performed (the step S104: Yes), the ECU 31 performs the predetermined deterioration detection (step S105).

After ending the predetermined deterioration, the ECU 31 controls each of the injectors 21 and 23 such that the fuel supplied to the engine 10 is changed from the CNG to the liquid fuel (step S106).

Then, the ECU 31 judges whether or not it is necessary to perform the detection of the deterioration of the three-way catalyst 13 in the both fuel (i.e. the CNG and the liquid fuel) (step S107). Here, whether or not it is necessary to perform the detection of the deterioration of the three-way catalyst 13 in the both fuel may be judged, for example, with reference to a flag indicating whether or not to be necessary. The flag is set in advance by a manufacturer or the like, for example, in view of a regulatory trend of the OBD regulation.

If it is judged that it is not necessary to perform the detection of the deterioration of the three-way catalyst 13 in the both fuel (the step S107: No), the process is returned and stopped to be in the standby state. On the other hand, if it is judged that it is necessary to perform the detection of the deterioration of the three-way catalyst 13 in the both fuel (the step S107: Yes), the ECU 31 performs the predetermined deterioration detection (step S108).

In the process in the step S101 described above, if it is judged not to be during the CNG driving (i.e. the vehicle 1 drives with the liquid fuel as the fuel) (the step S101: No), the ECU 31 judges whether or not the operating range of the vehicle 1 corresponds to the operating range in which the detection of the deterioration of the three-way catalyst 13 can be accurately performed (step S109).

If it is judged that the operating range of the vehicle 1 does not correspond to the operating range in which the detection of the deterioration of the three-way catalyst 13 can be accurately performed (the step S109: No), the process is returned and stopped to be in the standby state. On the other hand, if it is judged that the operating range of the vehicle 1 corresponds to the operating range in which the detection of the deterioration of the three-way catalyst 13 can be accurately performed (the step S 109: Yes), the ECU 31 judges whether or not it is necessary to perform the detection of the deterioration of the three-way catalyst 13 in the both fuel (step S 110).

If it is judged that it is not necessary to perform the detection of the deterioration of the three-way catalyst 13 in the both fuel (the step S110: No), the ECU 31 performs the process in a step S112 described later. On the other hand, if it is judged that it is necessary to perform the detection of the deterioration of the three-way catalyst 13 in the both fuel (the step S110: Yes), the ECU 31 performs the predetermined deterioration detection (step S111).

Then, the ECU 31 controls each of the injectors 21 and 23 such that the fuel supplied to the engine 10 is changed from the liquid fuel to the CNG (step S 112). Then, the ECU 31 performs the predetermined deterioration detection (step S113).

### <Modified Example>

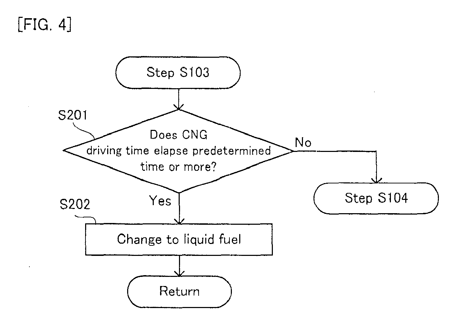

Next, a modified example of the vehicle control apparatus 100 in the embodiment will be explained with reference to a flowchart in FIG. 4.

In FIG. 4, the ECU 31 as one portion of the vehicle control apparatus 100 in the modified example judges whether or not a CNG driving time elapses a predetermined time or more after the process in the step S103 described above (refer to FIG. 3) (step S201).

If it is judged that CNG driving time is less than the predetermined time (the step S201: No), the ECU 31 performs the process in the step S104 described above (refer to FIG. 3). On the other hand, if it is judged that CNG driving time elapses the predetermined time or more (the step S201: Yes), the ECU 31 controls each of the injectors 21 and 23 such that the fuel supplied to the engine 10 is changed from the CNG to the liquid fuel (step S202).

By virtue of such a configuration, it is possible to prevent that the CNG is used, for example, more than intended by a manufacturer or the like, which is extremely useful in practice.

The present invention is not limited to the aforementioned embodiments, but various changes may be made, if desired, without departing from the essence or spirit of the invention which can be read from the claims and the entire specification. A vehicle control apparatus, which involves such changes, is also intended to be within the technical scope of the present invention.

### Description of Reference Codes

- 1: hybrid vehicle
- 10: engine
- 11: intake passage
- 12: exhaust passage
- 13: three-way catalyst
- 21, 23: injector
- 22: liquid fuel tank
- 24: CNG tank
- 31: ECU
- 100: vehicle control apparatus

## Claims

1. A vehicle control apparatus mounted on a vehicle comprising: an engine which can use a first fuel and a second fuel in which emission is lower than that of the first fuel; a fuel changing device capable of changing between the first fuel and the second fuel and supplying it to the engine; and a catalyst placed in an exhaust system of the engine, said vehicle control apparatus comprising:
a catalyst deterioration detecting device capable of performing detection of deterioration of the catalyst; and
a controlling device for controlling said catalyst deterioration detecting device to perform the detection of the deterioration when an operating range of the vehicle corresponds to an operating range suitable for the detection of the deterioration and when the first fuel is supplied to the engine by the fuel changing device.

2. The vehicle control apparatus according to claim 1, wherein said controlling device controls the fuel changing device to supply the first fuel to the engine and controls said catalyst deterioration detecting device to perform the detection of the deterioration after the operating range of the vehicle corresponds to the operating range suitable for the detection of the deterioration when the second fuel is supplied to the engine by the fuel changing device.

3. The vehicle control apparatus according to claim 1, wherein said controlling device controls the fuel changing device to keep supplying the first fuel to the engine even after the operating range of the vehicle corresponds to an operating range in which the second fuel is to be supplied to the engine, controls said catalyst deterioration detecting device to perform the detection of the deterioration after the operating range of the vehicle corresponds to the operating range suitable for the detection of the deterioration, and controls the fuel changing device to supply the second fuel to the engine after the detection of the deterioration is performed by said catalyst deterioration detecting device.

4. The vehicle control apparatus according to claim 3, wherein said controlling device controls the fuel changing device to supply the second fuel to the engine when a time length for supplying the first fuel to the engine elapses a predetermined time if the fuel changing device is controlled by said controlling device to keep supplying the first fuel to the engine even after the operating range of the vehicle corresponds to the operating range in which the second fuel is to be supplied to the engine.

5. The vehicle control apparatus according to claim 1, wherein said controlling device controls, the fuel changing device to supply the second fuel to the engine and controls said catalyst deterioration detecting device to perform the detection of the deterioration after the detection of the deterioration is performed by said catalyst deterioration detecting device.

6. The vehicle control apparatus according to claim 3, wherein said controlling device controls the fuel changing device to supply the second fuel to the engine and controls said catalyst deterioration detecting device to perform the detection of the deterioration after the detection of the deterioration is performed by said catalyst deterioration detecting device.

7. The vehicle control apparatus according to claim 1, wherein said controlling device controls said catalyst deterioration detecting device to perform the detection of the deterioration, subsequently controls the fuel changing device to supply the first fuel to the engine, and controls said catalyst deterioration detecting device to perform the detection of the deterioration, after the operating range of the vehicle corresponds to the operating range suitable for the detection of the deterioration when the second fuel is supplied to the engine by the fuel changing device.

8. The vehicle control apparatus according to claim 1, wherein the first fuel is gaseous fuel and the second fuel is liquid fuel.
